(19) **Europäisches Patentamt**

**European Patent Office**

**Office européen des brevets**

(11) Veröffentlichungsnummer: **0 077 416**
**B1**

(12) **EUROPÄISCHE PATENTSCHRIFT**

(45) Veröffentlichungstag der Patentschrift:
**29.01.86**

(21) Anmeldenummer: **81108620.6**

(22) Anmeldetag: **21.10.81**

(51) Int. Cl.⁴: **A 01 F 12/44**

(54) **Zuführboden für Erntemaschinen.**

(43) Veröffentlichungstag der Anmeldung:
**27.04.83 Patentblatt 83/17**

(45) Bekanntmachung des Hinweises auf die Patenterteilung:
**29.01.86 Patentblatt 86/5**

(84) Benannte Vertragsstaaten:
**BE DE FR GB IT SE**

(56) Entgegenhaltungen:
**FR - A - 1 541 478**
**GB - A - 2 055 540**
**GB - A - 2 056 242**
**GB - A - 2 063 036**
**US - A - 2 228 228**
**US - A - 2 694 493**
**US - A - 3 116 236**
**US - A - 3 603 063**

(73) Patentinhaber: **DEERE & COMPANY, 1 John Deere Road, Moline Illinois 61265 (US)**

(72) Erfinder: **Rohwedder, Helmut, Rosenstrasse 12, D-6660 Zweibrücken 17 (DE)**

(74) Vertreter: **Sartorius, Peter et al, DEERE & COMPANY European Office, Patent Department Postfach 503 Steubenstrasse 36-42, D-6800 Mannheim 1 (DE)**

## Beschreibung

Die Erfindung bezieht sich auf einen Zuführboden für Erntemaschinen, insbesondere Mähdrescher, mit zahlreichen parallel zueinander in Förderrichtung des Erntegutes verlaufenden, in einem Rahmen angeordneten Hangleisten, zwischen denen Böden vorgesehen sind, wobei der Zuführboden unterhalb eines Dreschkorbes angeordnet und über ein Gebläse mit Reinigungsluft beaufschlagbar ist.

Es ist bereits ein Mähdrescher bekannt (US-A-3049129), der unterhalb eines Dreschkorbes und eines druckluftbeaufschlagten Hordenschüttlers einen Zuführboden aufweist, der mit in Förderrichtung des Erntegutes sich erstreckenden und parallel zueinander verlaufenden Hangleisten ausgerüstet ist, über die das Erntegut zu einer Reinigungsvorrichtung geleitet wird, die mittels eines Gebläses beaufschlagbar ist. Derartige Zuführböden haben jedoch den Nachteil, dass das Spreugemisch gemeinsam mit dem ausgeschiedenen Erntegut auf die Siebe abgegeben wird, so dass erst dann die notwendige Reinigung, d. h. die Abscheidung des Erntegutes von dem Spreu-Strohgemisch, stattfindet und somit bei einer derartigen Anordnung keine zufriedenstellende Reinigung des Erntegutes erfolgt.

Ferner ist es bei Mähdreschern bekannt (US-A-3116236), die dem Zuführboden nachgeschalteten Siebe über mehrere hintereinander angeordnete, sich über die gesamte Breite der Siebe erstreckende Düsen mit Reinigungsluft zu beaufschlagen. Die einzelnen Düsen bestehen aus je einem Rohr mit einem Längsschlitz zum Auslass der Reinigungsluft. In dem Längsschlitz sind zahlreiche mit Abstand zueinander angeordnete Führungsplatten vorgesehen, die zur Führung des Luftstromes dienen. Die hintereinander angeordneten Rohre sind stirnseitig an je eine Versorgungsleitung angeschlossen, die über einen Rohrbalg mit je einem Gebläse verbunden ist. Eine derartige Luftversorgung ist wegen der zahlreichen Rohre zur Luftversorgung einer relativ kleinen Siebfläche aufwendig und teuer.

Ausserdem ist es bei Strohschüttlern für Dreschmaschinen und Mähdrescher bekannt (DE-A-2160038), zwischen der Abgabeseite der einzelnen Horden und der Aufnahmeseite der nachfolgenden Horden ein mit Druckluft beaufschlagbares, mehrere Luftdüsen aufweisendes, stationäres Rohr vorzusehen. Die Luftdüsen weisen infolge der unterschiedlichen Stellungen der Horden einen unterschiedlichen Abstand zur Oberfläche der einzelnen Horden auf, so dass eine ungleichmässige Windbeaufschlagung der Horden erfolgt.

Es ist ferner ein Mähdrescher mit einer quer verlaufenden Dresch- und Trenntrommel bekannt (GB-A-2056242), unter der ein geneigt verlaufender Höhenförderer zur Aufnahme des ausgedroschenen Erntegutes angeordnet ist, der das Erntegut einem nachgeschalteten horizontal verlaufenden Zuführboden aufgibt, der im Bereich der Aufgabestelle des Zuführbodens über ein Gebläse mit Reinigungsluft beaufschlagt wird. Da der Zuführboden mit Hinblick auf den unterhalb der Dresch- und Trenntrommel angeordneten Höhenförderer relativ kurz ausgebildet ist, reicht eine derartige Windbeaufschlagung des Zuführbodens aus. Bei einem längeren Zuführboden ist eine derartige Beaufschlagung mit Reinigungsluft nicht zufriedenstellend.

Eine Verbesserung der Windbeaufschlagung des Förderbodens wird beispielsweise mit einer nach der FR-A-1541478 bekannten Gebläseanordnung erreicht, die zahlreiche zwischen Hangleisten eines Zuführbodens angeordnete Düsen aufweist. Eine derartige Vorrichtung ist jedoch aufwendig und teuer.

Ferner ist ein Zuführboden für einen Mähdrescher der eingangs aufgeführten Art bekannt (GB-A-2055540), der unterhalb einer nach dem Axialflussprinzip arbeitenden Dresch- und Trenntrommel angeordnet ist und der mit zahlreichen parallel zueinander verlaufenden Hangleisten ausgerüstet ist, die über ein Reinigungsgebläse zumindest teilweise mit Reinigungsluft beaufschlagt werden. Die Auslassöffnung des Reinigungsgebläses ist hierzu im Bereich der Aufgabeseite des Zuführbodens angeordnet, wobei die Hauptrichtung des Reinigungsgebläses in Richtung der Dresch- und Trenntrommel zeigt, so dass der hintere Teil des Zuführbodens nicht ausreichend mit Reinigungsluft versorgt werden kann.

Demgegenüber liegt der Erfindung die Aufgabe zugrunde, die Hangleisten des Zuführbodens derart auszubilden und anzuordnen, dass bereits vor Auftreffen des Erntegutes auf die dem Zuführboden nachgeschalteten Siebe eine Vorsortierung des Erntegutes auf dem Zuführboden erfolgen kann. Diese Aufgabe ist dadurch gelöst worden, dass mehrere Hangleisten jede für sich als Luftzuführkanäle ausgebildet sind, seitlich oder im Bereich der Oberkante der Hangleiste eine Auslassöffnung zum Auslass der Reinigungsluft aufweisen und über einen Zuführkanal mit dem Gebläse verbunden sind. Durch die vorteilhafte Ausbildung der Hangleisten, die Teil einer Luftzuführvorrichtung sind, erhält man eine vorteilhafte Windbeaufschlagung des Zuführbodens und somit eine bessere Vorreinigung bzw. Vorsortierung des Erntegutes, da bereits ein Teil des Spreu-Strohgemisches vom Erntegut getrennt werden kann. Hierdurch wird eine Entlastung der nachgeordneten Siebe gewährleistet. Die Hangleisten sind hierzu mit dem Zuführkanal eines Gebläses verbunden und weisen im Bereich der Oberkante der Hangleiste eine entsprechende Auslassöffnung auf. Auf diese Weise kann auf zusätzliche Rohrleitungssysteme bzw. Düsen verzichtet werden, da die Hangleisten gleich zwei Funktionen übernehmen können. Einmal dienen sie zur Luftführung der Reinigungsluft und zum anderen zur einwandfreien Förderung des Erntegutes auf den Zuführboden auch bei Schräglage des Mähdreschers.

In weiterer Ausgestaltung der Erfindung ist es vorteilhaft, dass der Zuführboden aus mindestens zwei gegeneinander versetzten Zuführbodenteilen besteht und die Luftauslassöffnungen im Bereich der Übergangsstelle zwischen den beiden Zuführbodenteilen vorgesehen sind und dass die Zuführbodenteile des Zuführbodens über Stegteile miteinander verbunden sind, die als in Richtung der Oberfläche des nachfolgenden Zuführbodens zeigende Düsen ausgebildet sind. Durch die Aufteilung des Zuführbodens in zwei Stufen kann eine weitere Verbesserung der Vorschichtung des Erntegutes erfolgen und gleichzeitig eine optimale Luftzufuhr gewährleistet werden, da die Stufen des Zuführbodens über Stegteile miteinander verbunden sind, die als in Richtung der Oberfläche des nachfolgenden Zuführbodens zeigende Düsen ausgebildet sind. Durch die Verwendung der Stegteile als Düsen, die in Richtung der Oberfläche des Zuführbodens zeigen, wird eine optimale und gleichmässige Luftversorgung des hinteren Teiles des Zuführbodens gewährleistet, so dass hierdurch auf einfache Weise eine Trennung des Erntegutes stattfinden kann, um somit eine Entlastung der sich anschliessenden Siebe der Reinigungsvorrichtung zu gewährleisten. Die vorteilhafte Ausbildung der Hangleiste als Luftkanal mit je einer Düse stellt eine Verbilligung gegenüber den bekannten aufwendigen Gebläseanordnungen dar, die neben den Hangleisten einen besonderen Austrittsstutzen aufweisen. Da die Auslassöffnung der Düse im Bereich des stirnseitigen Endes der Hangleiste vorgesehen ist, lässt sich auch auf einfache Weise eine Luftversorgung des hinteren Teils des Zuführbodens durchführen. Somit wird über die gesamte Länge des Zuführbodens eine optimale Luftversorgung sichergestellt.

Ferner ist es vorteilhaft, dass die nebeneinander liegenden Hangleisten bzw. deren Düsen über eine Versorgungsleitung gemeinsam mit Druckluft beaufschlagbar sind. Vorteilhaft ist es ausserdem, dass im Bereich des Endes des hinteren Zuführbodenteils Düsen zur Druckluftversorgung einer nachgeschalteten Reinigungsvorrichtung vorgesehen sind.

In der Zeichnung sind mehrere Ausführungsbeispiele eines Zuführbodens schematisch dargestellt.

Es zeigt:

Fig. 1 eine schematische Darstellung eines Mähdreschers mit einem unterhalb eines Hordenschüttlers und einer Dreschtrommel vorgesehenen Zuführboden, der über eine Gebläsevorrichtung mit Reinigungsluft beaufschlagt wird;

Fig. 2 eine Seitenansicht des Zuführbodens gemäss Fig. 1;

Fig. 3 ein weiteres Ausführungsbeispiel eines Zuführbodens;

Fig. 4 eine Hangleiste eines weiteren Zuführbodens;

Fig. 5 eine perspektivische Darstellung des vorderen Zuführbodenteils gemäss Fig. 1;

Fig. 6 eine Ansicht der Düsen entlang der Linie A–B;

Fig. 7 eine perspektivische Darstellung einer Düse gemäss Fig. 5.

In der Zeichnung ist mit 2 ein Mähdrescher bezeichnet, der mit einer Erntebergungsvorrichtung 4 unterhalb eines Fahrerstandes 5 ausgerüstet ist und der zwei vordere antreibbare Laufräder 6 und zwei hintere steuerbare Laufräder 8 aufweist. Im Mähdreschergehäuse 10 des Mähdreschers 2 befindet sich eine Dreschtrommel 12 mit einem Dreschkorb 14, an den sich ein Hordenschüttler 16 anschliesst. Unterhalb des Hordenschüttlers 16 ist ein Zuführboden 18 und eine Reinigungsvorrichtung 20 vorgesehen, die über ein Gebläse 22 druckluftbeaufschlagbar ist.

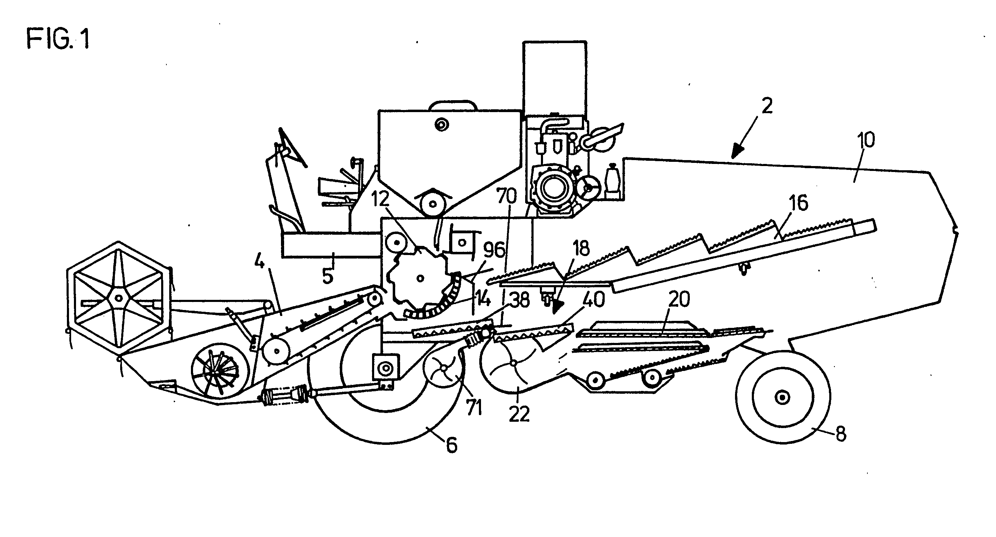

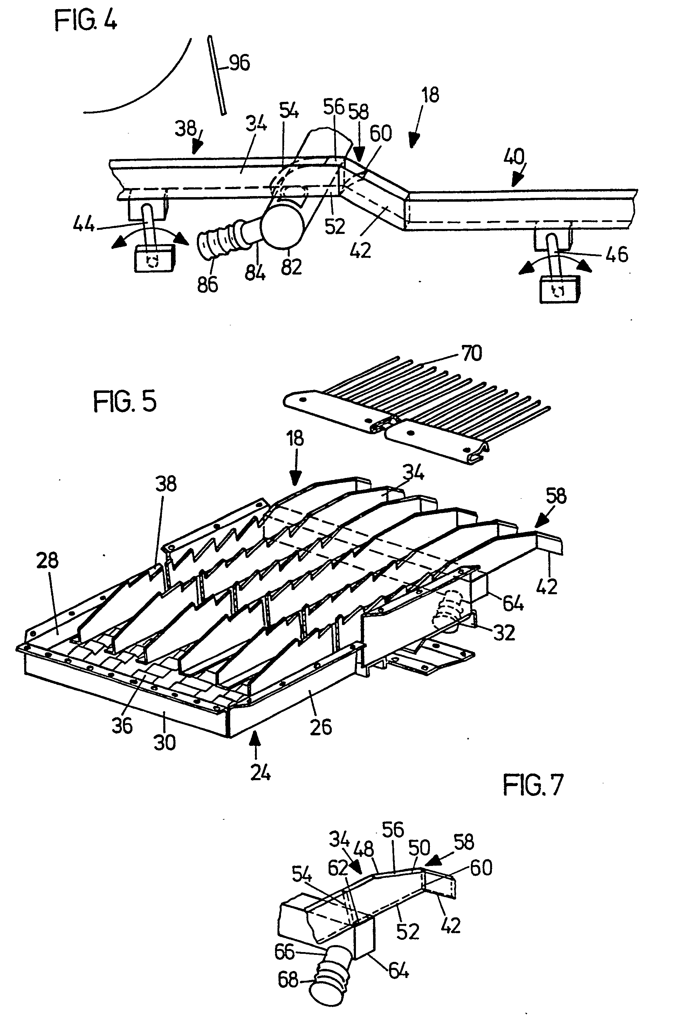

Der Zuführboden (Fig. 1, 5) besteht aus einem Rahmen 24, der aus zwei parallel zueinander verlaufenden Längsträgern 26 und 28 besteht, die über einen vorderen Querträger 30 und einen hinteren Querträger 32 miteinander starr verbunden sind. Zwischen den Längsträgern 26 und 28 befinden sich zahlreiche parallel zueinander verlaufende Hangleisten 34, die mit dem Rahmen 24 fest verbunden sind, und die von der Seite her gesehen mit einem sägeförmigen oberen Profil versehen sind. Zwischen den parallel zueinander verlaufenden Hangleisten 34 befinden sich Bodenteile 36, die mit ihren entsprechenden Enden an die Querträger 30, 32 angeschlossen sind und mit ihren Seitenkanten an die Hangleisten 34 angrenzen. Die Bodenteile 36 können ebenso wie die Hangleisten 34 mit einer gewellten bzw. sägeförmig verlaufenden Oberfläche versehen sein.

In Fig. 5 ist lediglich ein vorderer Zuführbodenteil 38 eines zweiteiligen Zuführbodens 18 gemäss Fig. 1, 2, 3 bzw. 4 dargestellt. An das Abgabeende des vorderen Zuführbodenteils 38 sind jeweils an den Hangleisten 34 Stegteile 42 angschlossen, die mit dem vorderen Querrahmen des nachgeschalteten Zuführbodenteils 40 starr verbunden sind. Der aus den beiden Zuführbodenteilen 38 und 40 gebildete Zuführboden 18 ist auf vorderen Schwingen 44 und hinteren Schwingen 46 schwingend gelagert, die über eine in der Zeichnung nicht dargestellte Antriebsvorrichtung kontinuierlich angetrieben werden.

Das hintere Ende der Hangleisten 34 des Zuführbodenteils 38 ist in Form einer Düse 58 ausgebildet (Fig. 5), die aus zwei parallel zueinander verlaufenden Seitenteilen 48 und 50, einem in etwa horizontal verlaufenden Boden 52 und einer geraden (Fig. 7) oder einer gebogenen (Fig. 4) Rückwand 54 gebildet sein kann. Das Ende des oberen Teils der Düse 58 ist mit einem Längsschlitz 56 versehen. Die aus den Seitenteilen 48 und 50 der Rückwand 54 sowie dem Boden 52 gebildete Düse 58 kann an ihrem vorderen Ende mit einer Vorderwand 60 ausgerüstet sein.

Im Bereich der Rückwand 54 befindet sich eine Einlassöffnung 62, an die sich ein sich über die gesamte Breite des Zuführbodens 18 erstreckender Zuführkanal 64 anschliesst. Der Zuführkanal 64 ist mit einem oder mehreren Einlassstutzen 66 ausgerüstet, der über einen elastischen Schlauch 68, der die Bewegung des Zuführbodens 18 zulässt, mit einem Gebläse 71 (Fig. 1) verbunden ist. Eine jede Hangleiste 34 ist mit einer gleichen Düse 58 ausgerüstet, die ebenfalls an den Zuführkanal 64 angeschlossen ist, so dass alle Düsen 58 gemeinsam über einen einzigen Zuführkanal mit Druckluft beaufschlagt werden können. Der Zuführkanal 64 kann aus einem kreisrunden Rohr (Fig. 1–4) oder einem Vierkantrohr (Fig. 5, 7) gebildet sein. An dem hinteren Ende der Hangleisten 34 ist ein Fingerrechen 70 vorgesehen, der an die Oberfläche der Hangleisten 34 bzw. an die Längsträger 26 und 28 lösbar angeschlossen sein kann. Über den Fingerrechen 70 wird das Erntegut geleitet und dem nachfolgenden Zuführbodenteil 40 aufgegeben.

Im Ausführungsbeispiel gemäss Fig. 5 sind die Düsen 58 in einer jeden Hangleiste 34 integriert und jeweils am hinteren Ende der Hangleiste vorgesehen. Es ist jedoch auch möglich, jede zweite Hangleiste 34 mit lediglich einer Düse 58 auszurüsten.

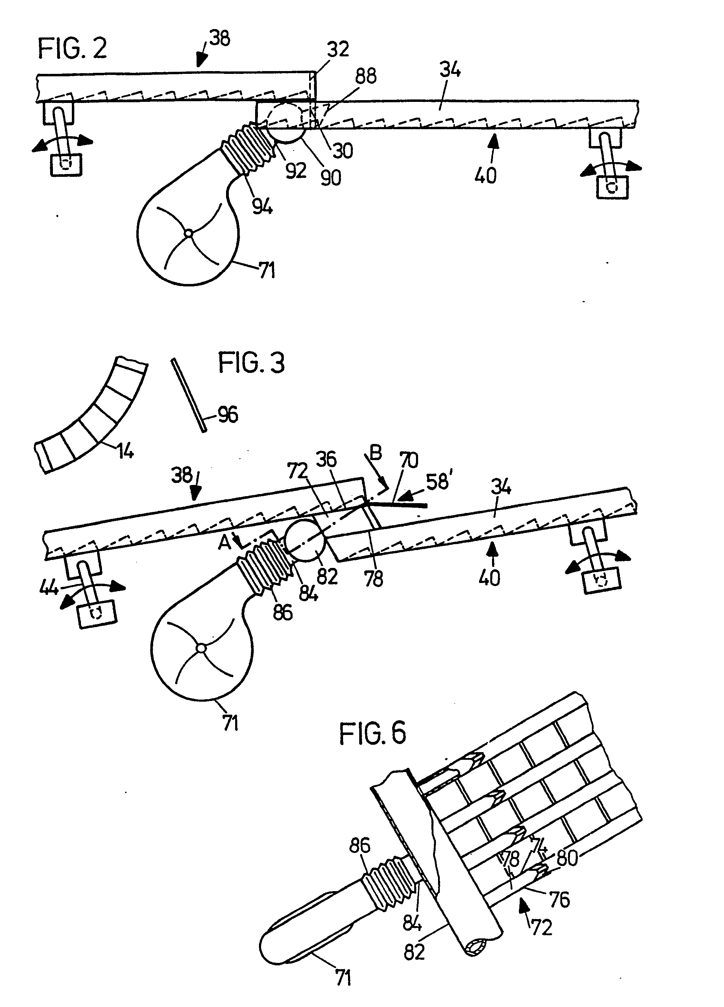

Im Ausführungsbeispiel gemäss Fig. 3 befinden sich die Düsen 58' nicht in den Hangleisten 34 sondern in Stegen 72, die das hintere Ende des Zuführbodenteils 38 mit dem vorderen Ende des Zuführbodenteils 40 verbinden. Die Stege 72 bestehen, wie aus Fig. 6 hervorgeht, aus zwei parallel verlaufenden Seitenteilen 74 und 76, die durch die untere Kante der vorderen Hangleiste 36 und der oberen Kante der nachfolgenden Hangleiste begrenzt werden. An die Seitenteile 74 und 76 schliesst sich eine Düse 80 an, die wie aus Fig. 3 hervorgeht, nach hinten geneigt verlaufend ausgebildet ist, so dass der Luftstrahl etwas nach oben gerichtet ist und den Fingerrechen 70 sowie die Oberfläche der sich an die Düsen 80 anschliessenden Hangleisten 34 mit Druckluft beaufschlagt. Die Düsen 80 eines jeden Steges 72 werden gemeinsam über einen Zuführkanal 82 mit Druckluft beaufschlagt, der, wie im Ausführungsbeispiel gemäss Fig. 4, über einen Stutzen 84 und einen elastischen Schlauch 86 an das Gebläse 71 angeschlossen ist.

Im Ausführungsbeispiel gemäss Fig. 2 sind zahlreiche nebeneinander angeordnete Düsen 88 unterhalb des hinteren Endes des vorderen Zuführbodenteils 38 vorgesehen, die die Oberfläche des nachfolgenden Zuführbodenteils 40 mit Druckluft beaufschlagen. Wie aus Fig. 2 ferner hervorgeht, ist das hintere Ende des Querträgers 32 des vorderen Zuführbodenteils 38 mit dem vorderen Querträger 30 des hinteren Zuführbodenteils 40 direkt verbunden. Die Düsen 88 können zwischen den einzelnen Hangleisten 34 vorgesehen sein. Ebenso ist es jedoch auch möglich, den vorderen Teil der Hangleiste 34 des Zuführbodenteils 40 als Düse auszubilden und mit entsprechenden Auslassöffnungen zu versehen, die in der Oberkante der Hangleiste 34 vorgesehen sein können. Die Düsen 88 sind ebenso wie die bereits beschriebenen Düsen 58 über einen Zuführkanal 90 gemeinsam verbunden, der über einen Einlassstutzen 92 und einen Schlauch 94 mit dem Gebläse 71 verbunden ist.

Im Arbeitseinsatz wird das Erntegut zum grossen Teil über den Dreschkorb 14 ausgeschieden und durch ein Korbspritzblech 96 auf den vorderen Zuführbodenteil 38 geleitet. Da der Zuführboden 18 über die Schwingen 44 und 46 in eine Schwingbewegung gebracht wird, wird das auf die Oberfläche des Zuführbodenteils 38 abgegebene Erntegut, das noch mit Stroh bzw. Spreu vermischt ist, über den Zuführbodenteil nach hinten geleitet, bis es in den Einflussbereich der Luftdüsen 58 bzw. 80, 88 gelangt. In diesem Bereich wird das Erntegut mit Druckluft beaufschlagt, so dass bereits auf dem Zuführboden 18 eine Trennung der Spreu vom Erntegut stattfinden kann, das weiter über den hinteren Zuführbodenteil 40 bewegt wird. Die Spreu wird über die Oberfläche des Zuführbodenteils 40 geblasen und von dem nachfolgenden Gebläse 22 erfasst und dann über die nachfolgende Reinigungsvorrichtung 20 geleitet, so dass sie dann nach hinten abgegeben werden kann. Auf diese Weise kann im Bereich des Zuführbodens 18 eine Vorsortierung des Erntegutes erfolgen, so dass die nachfolgende Reinigungsvorrichtung 20 weniger belastet wird, wodurch eine effektivere Reinigung des Erntegutes gewährleistet ist.

## Patentansprüche

1. Zuführboden (18) für Erntemaschinen, insbesondere Mähdrescher, mit zahlreichen parallel zueinander in Förderrichtung des Erntegutes verlaufenden, in einem Rahmen (24) angeordneten Hangleisten (34), zwischen denen Böden vorgesehen sind, wobei der Zuführboden (18) unterhalb eines Dreschkorbes angeordnet und über ein Gebläse (71) mit Reinigungsluft beaufschlagbar ist, dadurch gekennzeichnet, dass mehrere Hangleisten (34) jede für sich als Luftzuführkanal ausgebildet sind, seitlich oder im Bereich der Oberkante der Hangleiste (34) eine Auslassöffnung (Längsschlitze 56) zum Auslass der Reinigungsluft aufweisen und über einen Zuführkanal (82) mit dem Gebläse (71) verbunden sind.

2. Zuführboden nach Anspruch 1, dadurch gekennzeichnet, dass der Zuführboden (18) aus mindestens zwei gegeneinander versetzten Zuführbodenteilen (38, 40) besteht und die Luftauslassöffnungen (Längsschlitze 56) im Bereich der Übergangsstelle zwischen den beiden Zuführbodenteilen (38, 40) vorgesehen sind.

3. Zuführboden nach Anspruch 1 oder 2, dadurch gekennzeichnet, dass die Zuführbodenteile (38, 40) des Zuführbodens (18) über Stegteile (72) miteinander verbunden sind, die als in Richtung der Oberfläche des nachfolgenden Zuführbodens (40) zeigende Düsen (88) ausgebildet sind.

4. Zuführboden nach den Ansprüchen 1 bis 3, dadurch gekennzeichnet, dass der hintere Teil der Hangleiste (34) als Luftkanal mit je einer Düse (58) ausgebildet ist, wobei die Auslassöffnung der Düse im Bereich des stirnseitigen Endes der Hangleiste (38) vorgesehen ist.

5. Zuführboden nach einem oder mehreren der vorherigen Ansprüche, dadurch gekennzeichnet, dass die nebeneinander liegenden Hangleisten (34) bzw. deren Düsen (58, 80, 88) über eine Versorgungsleitung (Zuführkanal 64, 82, 90) gemeinsam mit Druckluft beaufschlagbar sind.

6. Zuführboden nach einem oder mehreren der vorherigen Ansprüche, dadurch gekennzeichnet, dass im Bereich des Endes des hinteren Zuführbodenteils (40) Düsen zur Druckluftversorgung einer nachgeschalteten Reinigungsvorrichtung (20) vorgesehen sind.

## Claims

1. Feed floor (18) für harvesting machines, in particular combine harvesters, having a large number of upwardly sloping bars (34) extending parallel to one another in the direction of conveyance of the crop material and arranged in a frame (24) and between which bottom elements are provided, the feed floor (18) being arranged below a threshing basket and it being possible to admit cleaning air thereto via a fan (71), characterised in that a plurality of upwardly sloping bars (34) are each independently formed as an air supply duct, have an outlet opening (longitudinal slots 56) laterally or in the region of the top edge of the bar (34) for outlet of the cleaning air and are connected in the fan (71) via a supply duct (82).

2. Feed floor according to claim 1, characterised in that the feed floor (18) consists of at least to parts (38, 40) staggered with respect to one another and the air outlet openings (longitudinal slots 56) are provided in the region of the transition between the two parts (38, 40) of the feed floor.

3. Feed floor according to claim 1 or 2, characterised in that the parts (38, 40) of the feed floor (18) are connected to one another by way of bridge elements (72) which are formed as nozzles (88) pointing in the direction of the surface of the following part (40) of the feed floor.

4. Feed floor according to claims 1 to 3, characterised in that the rear part of the upwardly sloping bar (34) is formed as an air duct with a nozzle (58) in each case, the outlet opening of the nozzle being provided in the region of the front (sic) end of the upwardly sloping bar (38) (sic).

5. Feed floor according to one or more of the preceding claims, characterised in that compressed air can be admitted in common to the upwardly sloping bars (34) disposed side by side and their zozzles (58, 80, 88) via a supply line (supply duct 64, 82, 90).

6. Feed floor according to one or more of the preceding claims, characterised in that nozzles are provided in the region of the end of the rear part (40) of the feed floor for supplying compressed air to a cleaning device (20) connected at the outlet side.

## Revendications

1. Table à grain ou table d'alimentation (18) pour machines de récolte, en particulier pour moissonneuse-batteuse, comportant un grand nombre de barres ou lames longitudinals parallèles entre elles (34), s'étendant dans la direction de transport des produits de récolte et disposées dans un cadre ou bâti (24), entre lesquelles des fonds sont prévus, la table à grain (18) étant disposée au-dessous d'un contre-batteur et pouvant être alimentée en air de nettoyage par un ventilateur (71), caractérisée en ce que plusieurs barres ou lames longitudinales (34) sont agencées, chacune de façon indépendante, en canal d'alimentation en air, en ce qu'elles comportent un orifice de sortie [fentes longitudinales (56)] servant à la sortie de l'air de nettoyage, prévu latéralement ou dans la zone voisine du bord supérieur de la barre longitudinale (34), et en ce qu'elles sont reliées au ventilateur (71) par l'intermédiaire d'un canal d'alimentation (82).

2. Table à grain suivant la revendication 1, caractérisée en ce que la table à grain (18) est constituée par au moins deux parties (38, 40) décalées l'une par rapport à l'autre, les orifices de sortie d'air (fentes longitudinales 56) étant prévus dans la zone de transition entre les deux parties (38, 40) de la table à grain.

3. Table à grain suivant la revendication 1 ou 2, caractérisée en ce que les parties (38, 40) de la table à grain (18) sont reliées entre elles par des éléments formant entretoises (72) qui sont agencés à la manière de buses (88) dirigées vers la surface de la partie suivante (40) de la table à grain.

4. Table à grain suivant les revendications 1 à 3, caractérisée en ce que la partie arrière de la barre longitudinale (34) est agencée à la manière d'un canal pneumatique comprenant chaque fois une buse (58), l'orifice de sortie de la buse étant prévu au voisinage de la partie terminale de la barre longitudinale (34).

5. Table à grain suivant une ou plusieurs des revendications précédentes, caractérisée en ce que les barres longitudinales (34) disposées les unes à côté des autres ou leurs buses (58, 80, 88) peuvent être alimentées conjointement en air comprimé par un conduit d'alimentation (canal d'alimentation 64, 82, 90).

6. Table à grain suivant une ou plusieurs des revendications précédentes, caractérisée en ce que des buses servant à l'alimentation en air comprimé d'un ensemble de nettoyage (20) placé en aval sont prévues dans la zone voisine de l'extrémité de la partie arrière (40) de la table à grain.

FIG.1

0077416

FIG. 2

FIG. 3

FIG. 6

FIG. 4

FIG. 5

FIG. 7